# Europäisches Patentamt

(19) European Patent Office

Office européen des brevets

(11) Publication number : **0 269 697 B1**

# EUROPEAN PATENT SPECIFICATION

(45) Date of publication of patent specification : **15.07.92 Bulletin 92/29**

(51) Int. Cl.⁵ : **H02G 15/013, H02G 15/10**

(21) Application number : **87903804.0**

(22) Date of filing : **29.05.87**

(86) International application number : **PCT/US87/01248**

(87) International publication number : **WO 87/07779 17.12.87 Gazette 87/28**

(54) SPLICE CLOSURE SYSTEM.

(30) Priority : **10.06.86 US 873012**

(43) Date of publication of application : **08.06.88 Bulletin 88/23**

(45) Publication of the grant of the patent : **15.07.92 Bulletin 92/29**

(84) Designated Contracting States : **AT BE CH DE FR GB IT LI NL SE**

(56) References cited :
**EP-A- 0 108 518
EP-A- 0 153 174
EP-A- 0 182 199
DE-A- 2 005 307
DE-A- 2 637 058**

(73) Proprietor : **RAYCHEM CORPORATION (a California corporation)
300 Constitution Drive
Menlo Park California 94025 (US)**

(72) Inventor : **RAGLAND, Glen, W.
5379 Redfield Drive
Dunwoody, GA 30338 (US)**
Inventor : **SIMONTON, Bobby
114 South Lake Shore Drive
Carrollton, GA 30117 (US)**
Inventor : **SNOKE, Phillip, Jack
822 Channing Place, N.W.
Atlanta, GA 30318 (US)**
Inventor : **TIMMERMAN, Kenneth, D.
356 Foxfire Drive
Smyena, GA 30080 (US)**
Inventor : **DEBBAUT, Christian, A., M.
111 Kiernan Choice
Cary, NC 27511 (US)**
Inventor : **DAWES, Keith
5025 Quail Hollow Drive
Raleigh, NC 27906 (US)**
Inventor : **HALSTEAD, Whit, G.
3311 Kimberly Way
San Mateo, CA 94403 (US)**
Inventor : **LOWELL, Koht
300 Constitution Drive
Menlo Park, CA 94025 (US)**

(74) Representative : **Hall, Robert Leonard et al
Raychem Limited Intellectual Property Law
Department Faraday Road Dorcan
Swindon, Wiltshire SN3 5HH (GB)**

EP 0 269 697 B1

## Description

### Background of the Invention

This invention relates to the field of splice closures and more particularly relates to those splice closures which are suitable for telecommunications applications.

Reference may be made to EP-A-0 182199 which discloses an article comprises a generally axially extending outer tubular member, a plurality of generally axially extending cylindrical members, and a heat-expandable foam sealing member.

DE-A-2005307 discloses an electrical connector assembly comprising a sleeve within which electrical terminals effect electrical connections between conductors of cables. The cables enter the sleeve through heat-shrinkable end-closure members that are heat-shrink and seal to the cables.

In the second of these heat-shrinkable end parts have to be made of a particular shape. We have now designed a closure employing heat-recoverable seals that can be adhesively attached to parts of an end cap.

In the telecommunications industry, splice closures may be utilized in a variety of applications including pressurized and unpressurized telephone plant as well as underground, aerial and direct buried applications. No matter what the application, however, all the applications have in common that the splice closure has to be environmentally secure.

The most challenging applications for a splice closure are underground and direct buried applications in which the threat of water is most severe. Various schemes and designs have been proposed to solve the problem of water leakage in these applications. However, none so far is totally satisfactory. The most common method of protecting the underground and direct buried splice is to entirely encapsulate the splice with a urethane or similar encapsulant. While this method is satisfactory in many respects it has the drawbacks that it is messy, it is time consuming, it is physically exhausting and above all re-entry of the splice is most difficult. To re-enter the splice, it is necessary to chip away or otherwise remove the cured encapsulant. This is an extremely time consuming and delicate task to accomplish without causing pair damage.

It would be most desirable to be able to protect an underground and direct buried splice without encapsulating it so that re-entry of the splice could be effectuated without much difficulty.

Alternatively, the splice may be protected by pressurizing the splice closure. In this case, encapsulation is unnecessary. However, many splice closures leak after a time so that the splice closure needs to be repaired or replaced.

It would thus be desirable to have an improved pressurized splice closure.

It is thus an object of the invention to provide a splice closure system in which encapsulation of the splice is unnecessary.

It is also an object of the invention to have a splice closure system which as far as practicable is not craft sensitive.

It is a further object of the invention to have an improved pressurized splice closure and a splice closure which will provide effective sealing and protection of splices in unpressurized cables.

These and other objects of the invention will become more apparent after reference to the following description considered in conjunction with the accompanying drawings.

The invention provides a cable closure comprising:

a central closure body;

a pair of end caps situated one at each end of the closure body, each end cap having at least one port for receiving a cable;

a heat recoverable seal for sealing the ports to a cable passing therethrough characterized in that:

the heat-recoverable seals can be adhesively attached to the ports, and in that means is provided on said seals and said end caps for preventing milk-off of said seals from the ports.

The invention may additionally provide a block for a cable having a plurality of insulated conductors wherein the block comprises void-filling material selectively inserted among the insulated conductors. The block may also contain a directional control device which comprises a conduit selectively inserted among the insulated conductors. The directional control device may also be provided as a separate article of commerce as an alternative to the block. Restraining means may be used for applying a restraining force with respect to the void-filling material and may be positioned around the void-filling material. A directional control device comprising a conduit may be selectively inserted among the insulated conductors and proximate to the void-filling material and means may be provided for sensing water in proximity to the void-filling material. While the above-described blocks are suitable for pressurized and non-pressurized applications, it is expected that the blocks will find most use in non-pressurized application.

A second aspect of the invention relates to a method of forming a cable block for a cable having a plurality of insulated conductors. The method includes separating the plurality of insulated conductors into a predetermined number of groups and selectively inserting void-filling material between the groups.

### Brief Description of the Drawings

Figure 1 is a perspective view of the assembled splice closure system according to the invention.

Figure 2 is a perspective view of the splice closure system according to the invention with the central closure body removed.

Figure 3 is a perspective view of one cable end showing the formation of the cable block according to the invention.

Figure 4 is a plan view partly in section of a cable end showing a completed cable block according to the invention.

Figure 5 is a plan view of a directional control device according to the invention.

Figure 6 is an enlarged perspective view of an anti-milk-off means according to the invention.

Figure 7 is a perspective view partly in schematic showing the splice closure system according to the invention with the central closure body removed.

Detailed Description of the Invention

According to the invention, there is disclosed a cable closure comprising a central closure body and a pair of structural foam end caps situated at each end of the closure body, and a pair of end caps situated at each end of the closure, each end cap having at least one port for receiving a cable, a heat recoverable seal adhesively attached to at least one port on each of the end caps, and means on the seals and the end caps for preventing milk-off of the seals from the ports.

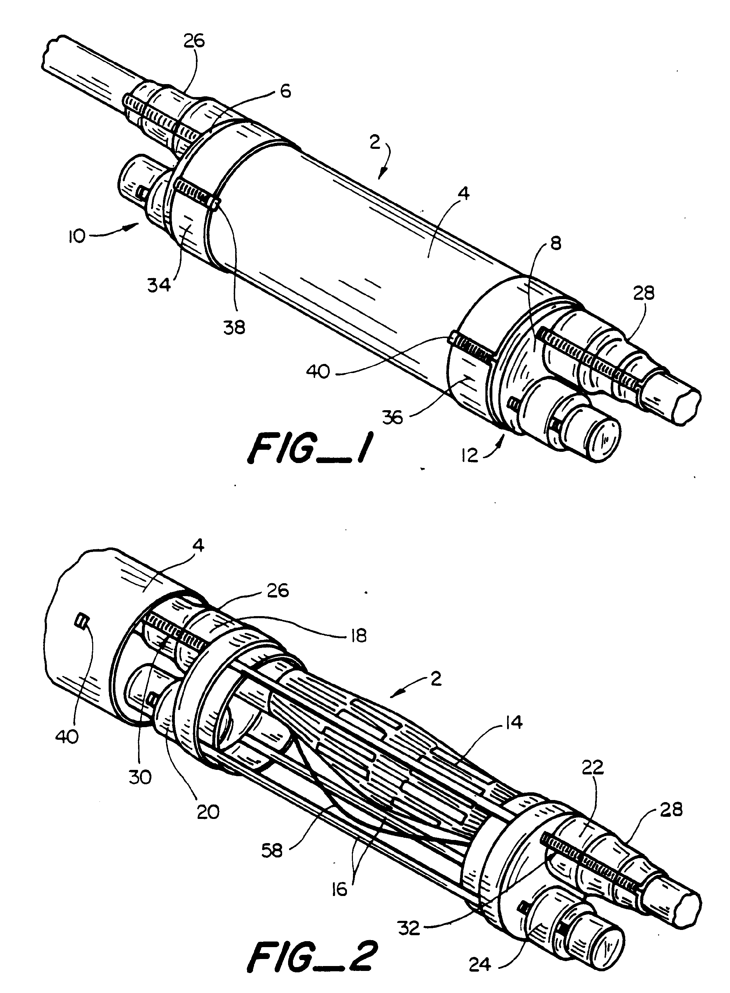

Referring to the figures in more detail and particularly referring to Figures 1 and 2 there is shown a cable closure 2 which comprises a central closure body 4 and a pair of end caps 6, 8 situated at each end 10, 12, respectively, of the closure body.

It is Preferred that the end caps be made from structural foam and most preferred that they be made from polypropylene structural foam. Other materials that will foam are also suitable for use with the invention. These other materials may include, for example, polyethylenes, polycarbonates and styrenes. Structural foam is preferred because the parts produced are lighter and more structurally perfect. Additionally warping of the part as would possibly occur in ordinary injection molding procedures wherein the part has a thick cross-section is avoided by using structural foam.

It has been found that the central closure body may advantageously be made from ultra high molecular weight polyethylene. Such a material is readily available in the form of low pressure gas pipe which has a shape and thickness ideally suited for the central closure body.

It is also preferred that at least one principal surface of each of the end caps is plated although usually the entire interior surface of the end cap will be plated. The plating material is unimportant and it may be, for example, zinc. The principal purpose of the plating material is to prevent, or at least to inhibit, moisture vapor transmission through the splice case. It may also be necessary or desirable to plate or otherwise lay a metallic foil within the central closure body for the same purpose.

It is well known that it is very difficult to get an adhesive to adhere to polypropylene. However, it has been found that adhesion is greatly enhanced when the surfaces, or at least portions thereof, to be adhered of the closure body and end caps undergo a surface preparation which comprises abrading, flame treating and/or priming with adhesive. By performing this surface preparation technique, adhesion is greatly improved.

With the central closure body 4 removed, the interior of the cable closure can be seen. Shown therein are the splices 14 and alignment bars 16. The interior may also comprise additional structure which will be discussed below.

It can be seen that each of the end caps in Figures 1 and 2 have two ports 18, 20, 22, 24 (four ports total) for receiving a cable. Of course, it may be desirable to have an end cap with more (or less) than two ports and this would be also contemplated within the scope of the invention. It can also be seen that these ports have a stepped outside diameter configuration. The purpose for this particular configuration is so that the ports may accept a variety of cables without changing the end cap. All that need be done is to cut off the end of the port at the appropriate location on the port. Where the cable passes through the port there is a heat recoverable seal 26, 28 attached thereto. The purpose of the seal is to seal the juncture between the cable and the port. Additionally, there are means generally indicated by 30, 32 on the seals and the end caps for preventing milk-off of the seals from the ports. This means will be described in more detail shortly.

The cable closure 4 may further comprise a pair of larger heat recoverable seals 34, 36, as shown in Figure 1, adhesively attached to, and sealing the joint between, each of the end caps 6, 8 and the central closure body 4. There may also be means generally denoted by 38, 40, on the larger seals and -the central closure body for preventing milk-off of the seals from the central closure body. Again, this means for preventing milk-off of the seals will be discussed in more detail shortly. Although not shown, the anti-milk-off means may alternatively be on the larger seals and the end caps.

It is most preferred that the heat recoverable seals be wrap-around electrically-heated heat recoverable seals. Such seals are well known to those skilled in the art and are readily available from the Raychem Corporation, the assignee of the instant application.

Referring now to Figure 6 there is shown in more detail the means for preventing milk-off of the seals from the cable closure. Milk-off, of course, is a phenomenon in which a heat shrinkable sleeve migrates from its intended position to a smaller dimension or diameter. It would be highly desirable to prevent this phenomenon from occurring. For clarity, the heat recoverable seal 26 is shown to be situated only on the smaller diameter of the port 18. It can be seen that the anti-milk-off means 30 comprises a hook 38 on one of the seal and the end cap and a mating receptacle 40 on the other of the seal and end cap. Usually the hook will be on the end cap and the mating receptacle will be on the seal. When this latter case is, in fact, the situation a conventional wrap-around electrically-heated heat recoverable seal may be used. These types of wraparound seals are typically formed by wrapping a piece of conductive polymer around the substrate and are closed by a channel 42. This channel has slots 44 transverse to its longitudinal axis. When the heat recoverable seal is assembled and placed on the end cap, and before heating, it may then be simply rotated until one of the transverse slots register with the hook on the end cap. At this point, the anti-milk-off means is in position. All that need be done now is to heat the heat recoverable seal. The heat recoverable seal may, and preferably will, have a hot melt adhesive on the interior of the heat recoverable seal which aids in the sealing. The melted adhesive would promote the milking-off of the seal. However, the anti-milk-off means prevents the seal from milking-off the end cap as would ordinarily occur without the anti-milk-off means. The anti-milk-off means on the larger seals and the central closure body would work in an identical manner.

According to the invention there is also disclosed a block for a cable having a plurality of insulated conductors comprising void-filling material selectively inserted among the insulated conductors. Such a block will have most application to a filled cable.

Those skilled in the art know that a filled cable,is typically used for non-pressurized telephone plant. The filling material of the cable may be petroleum jelly or may be FLEXGEL® (trademarked product of Western Electric). Ordinarily, such a block will be unnecessary for an unfilled cable since such a cable is usually pressurized.

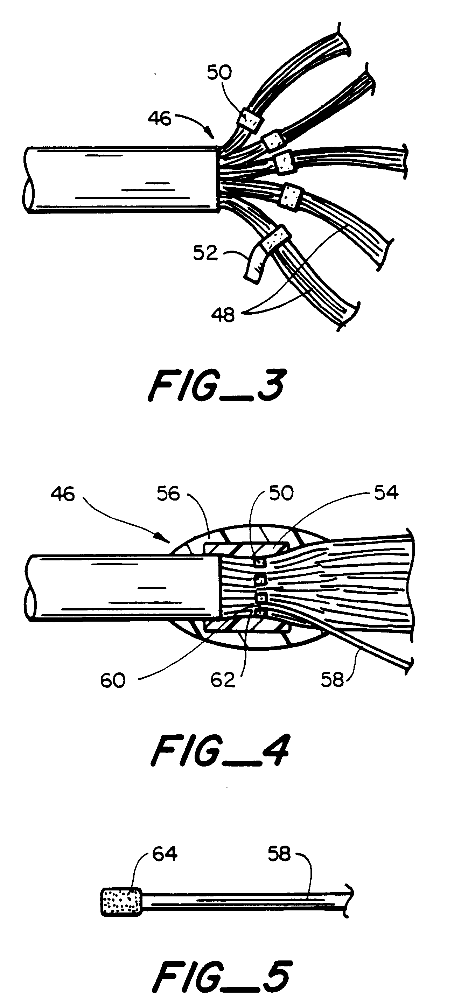

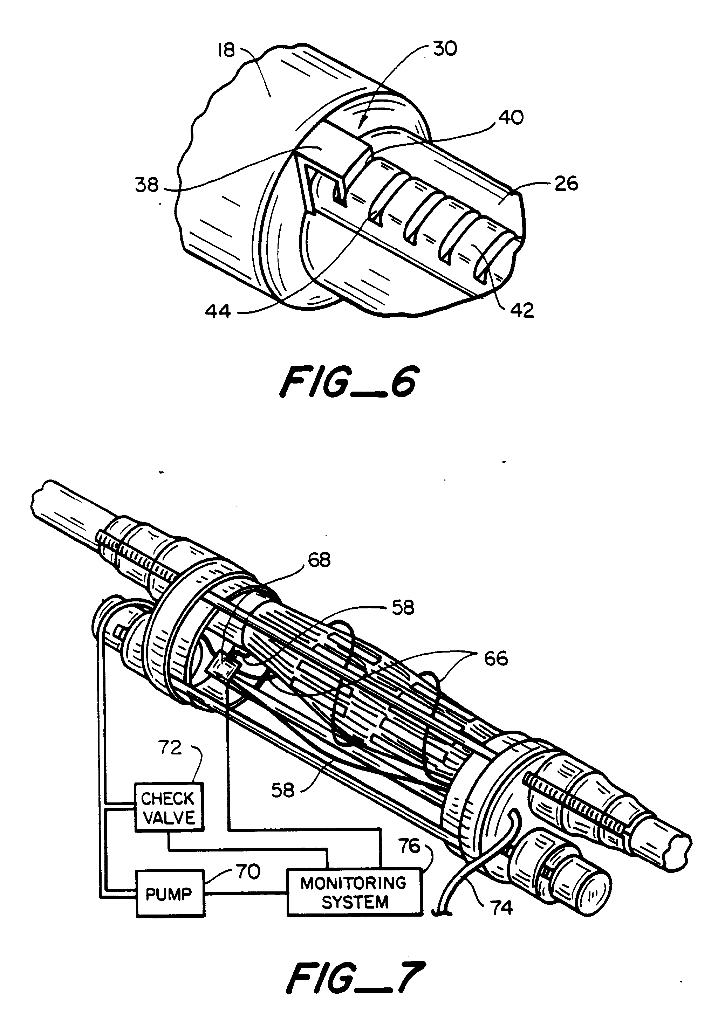

The block generally denoted by 46 can be seen in more detail by referring to Figures 3 and 4. As can be seen in Figure 3, the block is formed by separating a plurality 48 of insulated conductors into a predetermined number of groups and then selectively inserting void-filling material 50 between the groups. This void-filling material may be as crude as sticks inserted between the groups so as to take up the voids between the groups. However, it is preferred that each of the groups be wrapped 52 with a particular type of material that is found to work more satisfactorily. This particular type of material is preferably foam rubber and more preferably is foam rubber that is made from an ethylene propylene rubber such as EPDM. It has further been found that insulation weather stripping works very well also. It is expected that each of the different groups will be wrapped a number of times with the void-filling material. Wrapping can be done using the strip in a continuous form by wrapping the center most group first, then laying in and wrapping additional groups one by one until all the groups have been included and the strip wrapped around the entire circumference of the bundle of conductors.

It is also expected that a combination of foam rubber, weather stripping or similar material and a gel will work very well. The gel can comprise a grease, but most preferably comprises a three-dimensional molecular structure having a cone penetration between 100 and 350 ($10^{-1}$ mm) and an ultimate elongation of at least 200%, such structures being formable out of urethane, silicon, or a non-silicon liquid rubber. Such gels are described and claimed in co-pending application serial numbers 434,011 filed October 12, 1982; 504,000, filed June 13, 1983; 507,435 filed June 23, 1983; and 656,555, filed August 31, 1984, the disclosures of which are incorporated herein by reference.

Due to the fact that the insulated conductors in a filled cable are covered with a greasy type material such as the petroleum jelly or FLEXGEL, mentioned above, the void-tilling material may tend to migrate. Accordingly, it is desirable that there be applied a restraining means for applying a restraining force with respect to the void-filling material. The restraining means is positioned around the void-filling material. This restraining means may be something as simple as glass tape. However, it is more preferred that the restraining means comprises a compressive means for applying a compressive force with respect to the void-filling material. This compressive means is preferably PERMAWRAP tape or, alternatively DR tape (well-known to those skilled in the art as double rubber or self-amalgamating tape). Referring now to Figure 4, it can be seen that there is applied a layer 54 of PERMAWRAP tape around the cable block. It has been found in practice that about 35 wraps of the PERMAWRAP tape will suffice. Over a period of time, the PERMAWRAP tape will relax so it is desirable to apply a further layer, preferably a rigid layer, which will constrain the PERMAWRAP tape and prevent its relaxation. This further layer may simply be hose clamps. However, this further layer 56, as shown in Figure 4, is preferably SCOTCHCAST® cast material (available from Minnesota Mining & Manufacturing Company) which is nothing more than an air hardenable compound in tape form identical to the tape doctors use to form a cast to repair a broken bone. This SCOTCHCAST material is simply wrapped around the blocs so as to completely encase the PERMAWRAP tape. Upon hardening a complete block is formed. Finally, in lieu of the SCOTHCAST material, there may be substituted a wraparound electrically-heated heat-recoverable sleeve.

Quite surprisingly, it has been found that the above-described block works very well in practice.

While the just-discussed block has most applicability to, and is preferred for use with, filled cable, its applicability to unfilled cable is nevertheless contemplated within the scope of the invention.

As further shown in Figure 4, the block may also comprise a directional control device 58. This directional control device consists of a conduit selectively inserted among the insulated conductors and proximate to the void-filling material. Normally, this directional control device will extend at least to some point 60 behind the block. The conduit takes the water that would ordinary build up a water head behind the block and transports it away from the block and, by means discussed later, disposes of it in a harmless way. By transporting the water away from the blocs the transmission of water through the block and into the splice is thereby avoided. It is noticed that the directional control device is positioned at the bottom 62 of the block. This is most desirable (although not absolutely necessary) since water will normally build up first at the bottom of the cable and so by removing it there first, a substantial build up of water is prevented.

The directional control device is shown in more detail in Figure 5. The conduit merely consists of a piece of polymeric tubing such as polyethylene, Nylon or other material. It is preferred that the conduit have a filter means 64 on one end so as to prevent clogging of the conduit. It has been found that a porous material such as sintered high density polyethylene (commercially available from Porex Technologies) works very satisfactorily for this purpose. It has been found that the directional control device works best when the surface of the conduit in the area of the block is abraded and primed with polyurethane.

It is expected that the directional control device will be used in the block. However, it is contemplated within the scope of the invention that the directional control device may at times be used separately by itself, in which case it is expected that the directional control device will have separate utility and thus may be sold as a separate article of commerce.

There is also disclosed according to the invention a block for a cable having a plurality of insulated conductors comprising void-filling material selectively inserted among the insulated conductors, restraining means for applying a restraining force with respect to the void-filling material and positioned around the void-filling material, a directional control device comprising a conduit selectively inserted among the insulated conductors and proximate to the void-filling material and means for sensing water in proximity to the void-filling material. Such a block would be suitable for a filled or unfilled cable.

This block is similar to the block shown in Figure 4 in that there is the void-filling material, a restraining means and also the directional control device. However, this embodiment further includes means for sensing water in proximity to void-filling material or elsewhere in the closure. Referring now to Figure 7 there is shown such a means 66 for sensing water. This means senses any water which has gotten into or past the block. One type of water sensing means suitable for use with the invention is TraceTek®, available from Raychem Corporation, which can sense water incrementally along its length. It is useful to separately sense and monitor the presence or absence of water in each cable coming into the splice closure area through the directional control device as well as separately detecting the presence of water in the splice closure itself.

It is contemplated that the cable closure would have a manifold 68 which would serve several purposes. One purpose of the manifold would be that the directional control device 58 could be inserted into the manifold and then proceed outwardly therefrom to the other cable block. However, there would also be a water sensing means, such as TraceTek, attached to the manifold which would serve to sense the water in the directional control device (and thus any water proximate to the void-filling material) and also any water that happens to be in the cable closure itself.

It is preferred that there be some means for removing the water from the directional control device. The reason of course for removing the water is that if it is not removed, the water will eventually backup behind the block to such a degree as to cause the block to fail. Upon failure, water will pass through the block and into the splice thereby damaging the splice. The means for removing water from the directional control device may be any of several means including, but not limited to, a pump 70, a check valve 72 or even a manually operated drain valve 74. While the pump and check valve are shown external to the closure, it is within the scope of the invention to have them internally located. When this is the case, a conduit for communicating with the outside of the closure may be provided.

Figure 7 shows schematically a complete system for sensing and monitoring the operation of the cable block. Already discussed in Figure 7 is the water sensing means such as the TraceTek. However, there may also be provided a telephone monitoring system 76, which may be addressable or non-addressable. Such a monitoring system is readily available from the Sparton Corporation, among others. The monitoring system may in general be used to monitor any or all of the pump, check valve, manually operated drain valve or directional control device. The monitoring means may further be used to monitor the water sensing means. In this way an operator at a remote location may determine the exact state of the cable closure and block in operation and further determine whether any water has penetrated the system and in fact to what extent.

The previously discussed embodiments of the cable closure and the cable blocs may now be combined into a splice closure system as disclosed in the previously described Figures. This splice closure system may comprise any of several embodiments. Thus, according to the invention, one embodiment of the splice closure system for a cable having a plurality of insulated conductors comprises a central closure body, a pair of structural foam end caps situated at each end of the closure body with the end caps and closure body defining a volume of space in which a cable is to be spliced and at least one cable block disposed within this volume, the cable block comprising void-filling material selectively inserted among the insulated conductors.

This embodiment of the invention may further comprise a directional control device comprising a conduit selectively inserted among the insulated conductors and proximate to the void-filling material,

There is also disclosed according to the invention a splice closure system for a cable having a plurality of insulated conductors comprising a central closure body, a pair of structural foam end caps situated at each end of the closure body, the end caps and the closure body defining a volume of space in which a cable is to be spliced, and a directional control device disposed within this volume, the directional control device comprising a conduit selectively inserted among the insulated conductors.

A further embodiment according to the invention is a splice closure system for a cable having a plurality of insulated conductors comprising a central closure body, a pair of end caps situated at each end of the closure body, each end cap having at least one port for receiving a cable, the end caps and the closure body defining a volume of space within which a cable is to be spliced. This splice closure system may further comprise at least one cable block disposed within this volume, the cable block comprising void-filling material selectively inserted among the insulated conductors, a heat recoverable seal adhesively attached to at least one port on each of the end caps and finally, means on the seals and the end caps for preventing milk-off of the seals from the ports.

This embodiment of the splice closure system may also comprise a directional control device comprising a conduit selectively inserted among the insulated conductors and proximate to the void-filling material.

In the final embodiment of the splice closure system, there is disclosed a splice closure system for a cable having a plurality of insulated conductors. The system comprises a central closure body, a pair of end caps situated at each end of the closure body, each end cap having at least one port for receiving a cable, the end caps and closure body defining a volume of space within which a cable is to be spliced, and a directional control device disposed within the volume, the directional control device comprising a conduit selectively inserted among the insulated conductors. This system further comprises a heat recoverable seal adhesively attached to at least one port on each of the end caps and means on the seals and end caps for preventing milk-off of the seals from the ports.

The various closure systems may also comprise a pair of larger heat recoverable seals adhesively attached to, and sealing the joint between, each of the end caps and the central closure body and means on the larger seals and central closure body for preventing milk-off of the seals from the central closure body. It is also preferred that the various heat recoverable seals are of the wraparound type which are preferably electrically heat recoverable.

It is preferred that the prevention means comprise a hook on one of the seal and end cap and a mating receptacle on the other of the seal and end cap. With respect to the larger seals, it is preferred that the prevention means comprise a hook on one of the seal and central closure body and a mating receptacle on the other of the seal and closure body.

As discussed previously, the closure systems may comprise a restraining means and most preferably a compressive means for applying a compressive force with respect to the void-filling material. Also as discussed previously, the closure systems may comprise various means for sensing water within the volume of the cable closure and for monitoring the water sensing means. There may also be means for removing water from the conduit as well as means for monitoring the directional control device and the water removal means.

## Claims

1. A cable closure (2) comprising:
   a central closure body (4);
   a pair of end caps (6,8) situated one at each end of the closure body (4), each end cap (6,8) having at least one port (18, 20, 22, 24) for receiving a cable;
   a heat-recoverable seal (26,28) for sealing the ports to a cable passing therethrough characterized in that:
   the heat recoverable seals (26,28) can be adhesively attached to the ports, and in that means (30,32) is provided on said seals (26,28) and said end caps (6,8) for preventing milk-off of said seals (26,28) from the ports (18,20,22,24).

2. The closure of claim 1 wherein said heat-recoverable seal is a wrap-around electrically-heated heat recoverable seal.

3. The closure of claim 1 wherein said end caps are made from structural foam.

4. The closure of claim 1, additionally comprising a block (46) for the cable, the cable being a filled cable having a plurality of insulated conductors, the block comprising:

void-filling material selectively inserted among the insulated conductors.

5. The closure of claim 4, wherein said void-filling material comprises foam rubber.

6. The closure of claim 4 additionally comprising restraining means for applying a restraining force with respect to said void-filling material and positioned around said void-filling material;

a directional control device (62) comprising a conduit selectively inserted among the insulated conductors and proximate to said void-filling material; and

means for sensing water in proximity to said void-filling material.

7. A method of forming a block for a cable having a plurality of insulated conductors by means of a closure according to claim 4, which method includes:

separating the plurality of insulated conductors into a predetermined number of groups; and

selectively inserting void-filling material between the groups.

8. The method of claim 7, further comprising the step of:

applying a restraining force with respect to said void-filling material.

9. The method of claim 7 further comprising the step of:

selectively inserting at least one directional control device between the groups.

## Patentansprüche

1. Kabelverschluß (2), der aufweist:

einen zentralen Verschlußkörper (4);

ein Paar von Endkappen (6, 8), von denen jeweils eine an jedem Ende des Verschlußkörpers (4) angeordnet ist, wobei jede Endkappe (6, 8) wenigstens eine Öffnung (18, 20, 22, 24) zur Aufnahme eines Kabels hat;

eine wärmerückstellbare Dichtung (26, 28) zum dichten Abschließen der Öffnungen auf einem durch sie verlaufenden Kabel, dadurch gekennzeichnet, daß: die wärmerückstellbaren Dichtungen (26, 28) an den Öffnungen haftend befestigbar sind und daß an den Dichtungen (26, 28) und den Endkappen (6, 8) Einrichtungen (30, 32) vorgesehen sind, um ein Nachfließen der Dichtungen (26, 28) aus den Öffnungen (18, 20, 22, 24) zu verhindern.

2. Verschluß nach Anspruch 1, wobei die wärmerückstellbare Dichtung eine elektrisch erwärmte, wärmerückstellbare Umwickeldichtung ist.

3. Verschluß nach Anspruch 1, wobei die Endkappen aus Strukturschaum bestehen.

4. Verschluß nach Anspruch 1, der ferner einen Block (46) für das Kabel aufweist, wobei das Kabel ein gefülltes Kabel mit einer Vielzahl von isolierten Leitern ist, wobei der Block aufweist:

ein selektiv zwischen die isolierten Leiter eingebrachtes Hohlraum-Füllmaterial.

5. Verschluß nach Anspruch 4, wobei das Hohlraum-Füllmaterial Schaumgummi umfaßt.

6. Verschluß nach Anspruch 4, der ferner aufweist: eine Halteeinrichtung, die in bezug auf das Hohlraum-Füllmaterial eine Haltekraft aufbringt und um das Hohlraum-Füllmaterial herum positioniert ist;

eine Richtungssteuereinrichtung (62), die eine selektiv zwischen die isolierten Leiter eingebrachte und dem Hohlraum-Füllmaterial nahe Leitung aufweist; und

eine Einrichtung, die Wasser in der Nähe des Hohlraum-Füllmaterials erfaßt.

7. Verfahren zum Bilden eines Blocks für ein Kabel mit einer Vielzahl von isolierten Leitern durch einen Verschluß nach Anspruch 4, wobei das Verfahren folgende Schritte aufweist:

Trennen einer Vielzahl von isolierten Leitern in eine vorbestimmte Anzahl von Gruppen; und

selektives Einbringen von Hohlraum-Füllmaterial zwischen die Gruppen.

8. Verfahren nach Anspruch 7, das ferner folgenden Schritt aufweist:

Aufbringen einer Haltekraft in bezug auf das Hohlraum-Füllmaterial.

9. Verfahren nach Anspruch 7, das ferner folgenden Schritt aufweist:

selektives Einbringen wenigstens einer Richtungssteuereinrichtung zwischen die Gruppen.

## Revendications

1. Fermeture (2) pour câble comportant :

un corps central (4) de fermeture ;

deux chapeaux d'extrémité (6, 8) situés à raison d'un à chaque extrémité du corps de fermeture (4), chaque chapeau d'extrémité (6, 8) ayant au moins un accès (18, 20, 22, 24) destiné à recevoir un câble ;

un joint d'étanchéité (26, 28) doué de reprise de forme à chaud destiné à assurer l'étanchéité des accès avec un câble passant à travers eux, caractérisée en ce que : les joints d'étanchéité (26, 28) doués de reprise de forme à chaud peuvent être reliés par adhésif aux accès, et en ce que des moyens (30, 32) sont prévus sur lesdits joints d'étanchéité (26, 28) et lesdits chapeaux d'extrémité (6, 8) pour empêcher lesdits joints d'étanchéité (26, 28) d'être expulsés des accès (18, 20, 22, 24).

2. Fermeture selon la revendication 1, dans laquelle ledit joint d'étanchéité doué de reprise de forme à chaud est un joint d'étanchéité doué de reprise de forme à chaud, chauffé électriquement et enroulé.

3. Fermeture selon la revendication 1, dans laquelle lesdits chapeaux d'extrémité sont réalisés en mousse structurale.

4. Fermeture selon la revendication 1, comportant en outre un bloc (46) pour le câble, le câble étant un câble rempli ayant plusieurs conducteurs isolés, le bloc comportant :

une matière de remplissage des espaces vides introduite sélectivement entre les conducteurs isolés.

5. Fermeture selon la revendication 4, dans laquelle ladite matière de remplissage des espaces vides comprend un caoutchouc mousse.

6. Fermeture selon la revendication 4, comportant en outre des moyens de retenue destinés à appliquer une force de retenue par rapport à ladite matière de remplissage des espaces vides et placés autour de ladite matière de remplissage des espaces vides ;

un dispositif de commande directionnelle (62) comprenant un conduit introduit sélectivement entre les conducteurs isolés et à proximité de ladite matière de remplissage des espaces vides ; et

des moyens destinés à détecter de l'eau à proximité de ladite matière de remplissage des espaces vides.

7. Procédé pour former un bloc pour un câble comportant plusieurs conducteurs isolés, au moyen d'une fermeture selon la revendication 4; lequel procédé consiste :

à séparer les conducteurs isolés en un nombre prédéterminé de groupes ; et

à introduire sélectivement une matière de remplissage des espaces vides entre les groupes.

8. Procédé selon la revendication 7, comprenant en outre l'étape qui consiste :

à appliquer une force de retenue par rapport à ladite matière de remplissage des espaces vides.

9. Procédé selon la revendication 7, comprenant en outre l'étape qui consiste :

à introduire sélectivement au moins un dispositif de commande directionnelle entre les groupes.

FIG_1

FIG_2

50

46

52

48

*FIG_3*

46  56  50  54

60  62  58

*FIG_4*

64  58

*FIG_5*

10

FIG_6

FIG_7